# EUROPEAN PATENT APPLICATION

(11) **EP 4 599 965 A1**
(43) Date of publication of application: **13.08.2025**
(21) Application number: 23894246.0
(22) Date of filing: 20.09.2023
(51) Int. Cl.: B23C 3/12, B23Q 15/00, B25J 13/08

(54) **MACHINING SYSTEM, TRAJECTORY GENERATION METHOD, AND PRODUCT MANUFACTURING METHOD**

(30) Priority: 25.11.2022 JP 2022188547
(71) Applicant: JFE Steel Corporation, Tokyo 100-0011 (JP)
(72) Inventor: WATANABE, Taku, Tokyo 100-0011 (JP); HARADA, Junji, Tokyo 100-0011 (JP)
(74) Representative: Hoffmann Eitle
(86) International application number: PCT/JP2023/034148
(87) International publication number: WO 2024/111234

(57) **Abstract**

A machining system 1 comprises: a machining device 20 configured to process a target material 80 containing a removal target 82; and a control device 12 configured to generate a motion trajectory 41 of the machining device 20 for removing the removal target 82 based on a three-dimensional shape and posture of the target material 80 and a position and shape of the removal target 82, and move the machining device 20 based on the motion trajectory 41. The control device 12 is configured to generate, as the motion trajectory 41, a path along which the machining device 20 approaches a base shape of the target material 80 while rotating around an outside of the target material 80 or a path along which the machining device 20 approaches the base shape of the target material 80 while rotating around an inside of the target material 80.

## Description

### TECHNICAL FIELD

The present disclosure relates to a machining system that removes, by machining, removal targets such as detrimental burrs or slag present on end surfaces such as cut surfaces or mold mating surfaces of steel products, a trajectory generation method, and a product manufacturing method.

### BACKGROUND

Ingots such as slabs, blooms, and billets as raw materials for steel products are mostly manufactured by continuous casting. Long cast steel with a predetermined cross section resulting from continuous casting is cut to a length suitable for processing a product, by oxy-fuel cutting or the like. Molten metal called slag may adhere to the cut surface of the cast steel by oxy-fuel cutting. Slag adversely affects the quality of the product in the subsequent processes of product processing. It is therefore necessary to remove slag from the cut surface.

Bar steel products such as shape steels, steel pipes or tubes, and steel bars after rolling are sawn to a length required for a product. Protrusions resulting from deformation by sawing, called burrs, occur on the cut surface of the product by sawing. Burrs adversely affect the quality of the product in the subsequent processes of product processing. It is therefore necessary to remove burrs from the cut surface.

Such slag or burrs are removed manually in some cases. The work of manually removing slag or burrs is very dangerous. For some products, the removal of slag or burrs is automated. For example, a system is known in which a grinder robot performs processing along a trajectory given in advance (see Patent Literature (PTL) 1).

### CITATION LIST

### Patent Literature

PTL 1: JP H3-178766 A

### SUMMARY

### (Technical Problem)

In a system that performs processing along a trajectory given in advance, it is difficult to recognize removal targets such as burrs or slag present on the end surfaces of cast products or steel products having various cross-sectional shapes and dimensions and cut and remove the removal targets at high speed. For such burrs or slag on the cut surfaces of a wide variety of products, a human operator visually observes the actual target material, presses a grinder, a chipping tool, or the like against the protruding part of the target material to cut it, and stops pressing the tool at the timing determined to be appropriate by the operator. The operator visually determines whether the protruding part remains to determine whether to perform the removal work again or end the removal work. Thus, in the case where an operator performs removal work, the removal work takes a long time. There is accordingly a need to remove removal targets present in various types of target materials at high speed.

It could therefore be helpful to provide a machining system, trajectory generation method, and product manufacturing method that can remove removal targets present in multiple types of target materials at high speed.

### (Solution to Problem)

(1) A machining system according to one embodiment of the present disclosure comprises: a machining device configured to process a target material containing a removal target; and a control device configured to generate a motion trajectory of the machining device for removing the removal target based on a three-dimensional shape and posture of the target material and a position and shape of the removal target, and move the machining device based on the motion trajectory. The control device is configured to generate, as the motion trajectory, a path along which the machining device approaches a base shape of the target material while rotating around an outside of the target material or a path along which the machining device approaches the base shape of the target material while rotating around an inside of the target material.
(2) In the machining system according to (1), the control device may be configured to generate, as the motion trajectory, a path along which the machining device moves toward an axial direction when the machining device rotates around the outside or the inside of the target material.
(3) In the machining system according to (1) or (2), the motion trajectory may include a first path that goes around the outside or the inside of the target material and a second path that goes around the outside or the inside of the target material from a start point that is a point inside or outside a start point of the first path. The control device may be configured to, if the removal target is present in only a part of the first path, generate a partial path passing only a range in which the removal target is present in the first path, and generate, as the motion trajectory, a path that includes the partial path, a path connecting an end point of the partial path to the start point of the second path, and the second path.
(4) In the machining system according to any one of (1) to (3), the machining device may include a cutting device configured to remove the removal target by cutting the removal target with an end mill.
(5) In the machining system according to (4), the control device may be configured to control the cutting device so that an angle between a rotation axis of the end mill and a feed direction of the end mill will be an acute angle.
(6) A trajectory generation method according to one embodiment of the present disclosure is a trajectory generation method of generating a motion trajectory for moving a machining device to remove a target material containing a removal target, the trajectory generation method comprising: measuring a three-dimensional shape and posture of the target material; recognizing a position and shape of the removal target; and generating, as the motion trajectory, a path along which the machining device approaches a base shape of the target material while rotating around an outside of the target material or a path along which the machining device approaches the base shape of the target material while rotating around an inside of the target material, based on the three-dimensional shape and posture of the target material and the position and shape of the removal target.
(7) A product manufacturing method according to one embodiment of the present disclosure comprises removing a removal target in a target material by moving a machining device based on a motion trajectory generated by executing the above-described trajectory generation method.

### (Advantageous Effect)

It is thus possible to provide a machining system, trajectory generation method, and product manufacturing method that can remove removal targets present in multiple types of target materials at high speed.

### BRIEF DESCRIPTION OF THE DRAWINGS

In the accompanying drawings:
FIG. 1 is a diagram illustrating an example of the structure of a machining system according to the present disclosure;
FIG. 2 is a diagram illustrating an example of a mode in which a target material is cut with an end mill;
FIG. 3 is a diagram illustrating an example of the movement path of the end mill in the case of cutting a removal target;
FIG. 4 is a diagram illustrating an example of the movement path and cutting range of the end mill in the case of cutting a removal target;
FIG. 5 is a perspective view illustrating an example of the movement path of the end mill;
FIG. 6A is a top view illustrating an example of the movement path of the end mill;
FIG. 6B is a side view of the movement path in FIG. 6A;
FIG. 7 is a diagram illustrating an example of the movement path of the end mill in the case where the target material is a steel H-beam;
FIG. 8 is a flowchart illustrating an example of the procedure of a cutting method according to the present disclosure;
FIG. 9 is a diagram illustrating an example of a structure in which the shape of a target material is measured using range finders in the X-axis, Y-axis, and Z-axis directions; and
FIG. 10 is a diagram illustrating an example of the movement path of the end mill determined based on the distances from the reference planes of the X-axis, Y-axis, and Z-axis to the target material.

### DETAILED DESCRIPTION

An embodiment of a machining system, trajectory generation method, and target material manufacturing method according to the present disclosure will be described below with reference to the drawings. The drawings are schematic and may be different from actual ones. The following embodiment is illustrative of a device or method for embodying the technical idea of the present disclosure, and is not intended to limit the structures to those described below. That is, various modifications can be made to the technical idea of the present disclosure within the technical scope defined by the claims.

### (Example of structure of machining system 1)

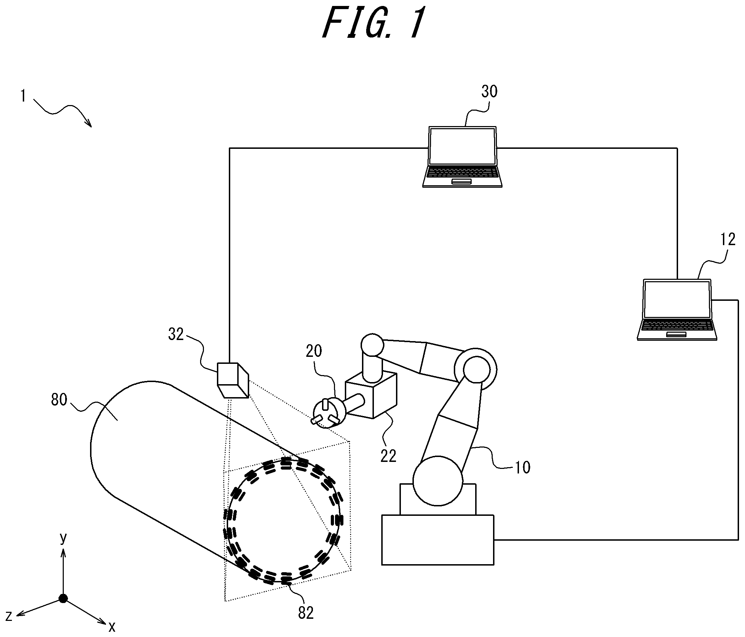

As illustrated in FIG. 1, a machining system 1 according to one embodiment of the present disclosure includes a shape measurement device 32, a removal target recognition device 30, a machining device 10, and a control device 12. The shape measurement device 32 measures the shape of a target material 80. The removal target recognition device 30 recognizes a removal target 82 to be removed in the target material 80 based on the measurement result of the shape of the target material 80. The control device 12 controls the machining device 10 to cut and remove the removal target 82 in the target material 80. An example of each component of the machining system 1 will be described below.

### <Machining device 10>

As illustrated in FIG. 1, the machining device 10 includes an end mill 20 and a spindle 22 that rotates the end mill 20. The time required to remove the removal target 82 by the end mill 20 is shorter than the time required to remove the removal target 82 by a grinding wheel. A device that combines the end mill 20 and the spindle 22 is also referred to as a cutting device. In other words, the machining device 10 may include a cutting device. In the case where the machining device 10 includes a cutting device, the machining system 1 is also referred to as a cutting system. The cutting device is not limited to a structure that combines the end mill 20 and the spindle 22. The cutting device may include devices having various other structures or shapes as long as it is capable of cutting the target material 80. The machining device 10 may include not only a cutting device but also various other devices such as a grinding device.

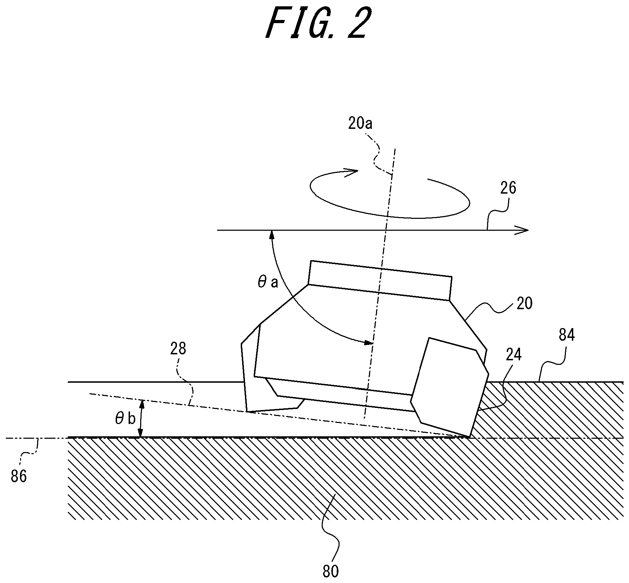

As illustrated in FIG. 2, the end mill 20 cuts a cutting target surface 84 of the target material 80 by moving in a feed direction 26 while rotating a cutting tip having a cutting point 24 around a rotation axis 20a. The spindle 22 rotates the cutting tip of the end mill 20 around the rotation axis 20a. The machining device 10 moves the end mill 20 along a cutting trajectory 86 so that the shape of the surface of the target material 80 after cutting will be the desired shape of the target material 80.

The rotation axis 20a of the end mill 20 is inclined toward the feed direction 26. Specifically, the angle θa between the rotation axis 20a and the feed direction 26 is an acute angle (i.e. less than 90 degrees). As a result of the rotation axis 20a being inclined, the angle θb between the bottom surface 28 connecting the bottom parts of the cutting tip of the end mill 20 and the cutting trajectory 86 is greater than 0 degrees. In other words, a heel angle is formed between the bottom surface 28 and the cutting trajectory 86. The formation of the heel angle enables stable cutting without increasing the cutting load in the direction of the rotation axis 20a of the end mill 20. As a result, cutting work is performed at high speed.

The machining device 10 includes a means of moving the end mill 20 and the spindle 22 to enable controlling the position of the cutting point 24 and the posture of the end mill 20 and spindle 22 at the cutting point 24. The machining device 10 may include a robot arm as the means of moving the end mill 20 and the spindle 22. The end mill 20 and the spindle 22 may be installed at the tip or an intermediate part of the robot arm. The robot arm may be, for example, a multi-axis robot. For example, the multi-axis robot may have six axes (rotation axes) and have degrees of freedom in six axial directions. The multi-axis robot may have degrees of freedom of movement in at least three axial directions. The multi-axis robot may be a vertical articulated robot.

The means of moving the end mill 20 and the spindle 22 is not limited to a robot arm. The means of moving the end mill 20 and the spindle 22 may include devices having various other structures or shapes as long as it is capable of controlling the position of the cutting point 24 and the posture of the end mill 20 and spindle 22 at the cutting point 24.

### <Control device 12>

The control device 12 controls the machining device 10 to cut and remove the removal target 82 contained on the surface of the target material 80 based on information acquired from the shape measurement device 32 or the removal target recognition device 30. The control device 12 may also control the shape measurement device 32 or the removal target recognition device 30. The control device 12 may include at least one processor such as a central processing unit (CPU) or a graphics processing unit (GPU) to enable controlling each component of the machining system 1. The control device 12 may be composed of one processor or a plurality of processors. The processor (or processors, the same applies hereafter) included in the control device 12 may control each component of the machining system 1 by reading and executing a program stored in a storage unit described later.

The control device 12 may include a storage unit. The storage unit stores various information or data. The storage unit may store, for example, the program executed by the control device 12, data used in the processes executed by the control device 12, the results of the processes, etc. The storage unit may function as work memory for the control device 12. The storage unit may include semiconductor memory or the like, but is not limited to such. For example, the storage unit may be implemented as internal memory of the processor used as the control device 12, or implemented as a hard disk drive (HDD) accessible from the control device 12. The storage unit may be implemented as a non-transitory readable medium. The storage unit may be integral with or separate from the control device 12.

The control device 12 may include a communication unit. The communication unit may include a communication interface for communicating with each component of the machining system 1, such as the machining device 10, the shape measurement device 32, and the removal target recognition device 30, by wire or wirelessly. The communication interface may be capable of communicating with other devices. The communication unit may include input-output ports for input and output of data from and to each component of the machining system 1 or other devices. The communication unit may transmit and receive necessary data and signals to and from each component of the machining system 1 or other devices. The communication unit may communicate based on a wired communication standard or a wireless communication standard. Examples of the wireless communication standard include cellular phone communication standards such as 3G, 4G, and 5G. Other examples of the wireless communication standard include IEEE 802.11 and Bluetooth^{®} (Bluetooth is a registered trademark in Japan, other countries, or both). The communication unit may support one or more of these communication standards. The communication unit is not limited to these examples, and may communicate with other devices and input/output data based on any of various standards.

### <Shape measurement device 32>

The shape measurement device 32 measures the three-dimensional shape of the surface of the target material 80. The shape measurement device 32 may include a camera that photographs the target material 80. The shape measurement device 32 may output a captured image of the target material 80 as the measurement result of the three-dimensional shape of the surface of the target material 80.

The shape measurement device 32 may calculate the three-dimensional shape of the surface of the target material 80 as point cloud information that is a set of three-dimensional coordinates of points on the surface of the target material 80, and output the point cloud information as the measurement result of the three-dimensional shape of the surface of the target material 80. For example, the shape measurement device 32 may include a depth camera that measures the distance to each point on the surface of the target material 80. The shape measurement device 32 may measure the three-dimensional coordinates of each point on the surface of the target material 80 based on the measurement results of the depth camera. The shape measurement device 32 may be configured to measure the three-dimensional coordinates of each point on the surface of the target material 80, for example, by causing a probe to contact the surface of the target material 80. The shape measurement device 32 may be configured to measure the three-dimensional coordinates of each point on the surface of the target material 80, for example, by irradiating the target material 80 with laser light or the like and detecting the reflected light.

### <Removal target recognition device 30>

The removal target recognition device 30 recognizes the position and shape of the removal target 82 to be removed on the surface of the target material 80 based on the measurement result of the three-dimensional shape of the surface of the target material 80. For example, the removal target 82 may include defects such as slag or burrs present on the outer periphery of the cut surface of the target material 80. The removal target 82 is not limited to defects such as slag or burrs, and may include various protruding parts. The removal target 82 may include recessed parts on the surface of the target material 80. The removal target 82 may include surface defects such as dirt and rust that do not cause a change in the shape of the surface of the target material 80. The removal target 82 is not limited to the above examples and may include various parts of the target material 80 that need to be removed.

The removal target recognition device 30 may be part of the control device 12. In other words, the control device 12 may acquire data of the three-dimensional shape of the surface of the target material 80 from the shape measurement device 32 and recognize the position and shape of the removal target 82.

### (Example of operation of machining system 1)

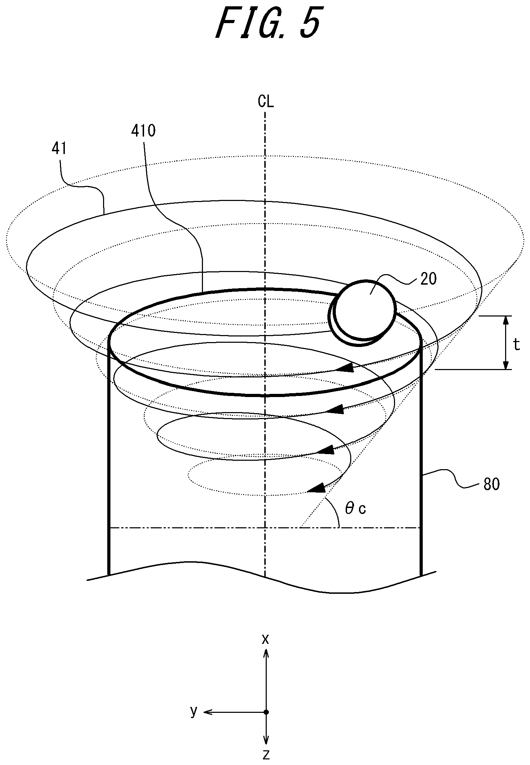

In the machining system 1, the control device 12 controls the machining device 10 to cut and remove the removal target 82 of the target material 80 recognized by the removal target recognition device 30. The control device 12 performs inverse kinematic calculations based on the position of the removal target 82 and the desired shape after removing the removal target 82 from the target material 80, and generates a motion trajectory 41 (see FIG. 5, etc.) of the machining device 10 so that the end mill 20 located at the tip or the like of the machining device 10 will contact the removal target 82 and cut and remove the removal target 82. The control device 12 may generate, as the motion trajectory 41, a path taken by the end on the bottom surface 28 side of the cutting point 24 (see FIG. 2) of the end mill 20. The control device 12 may generate the motion trajectory 41 so as to include information of the heel angle of the end mill 20. The control device 12 may generate the motion trajectory 41 so as to include information of the inclination of the bottom surface 28 of the end mill 20 relative to the end surface of the target material 80 when the end mill 20 is viewed from the feed direction 26 .

The control device 12 controls the machining device 10 to operate the end mill 20 based on the generated motion trajectory 41, thus cutting the removal target 82. The shape measurement device 32 measures the shape of the target material 80 again after cutting work. The removal target recognition device 30 determines whether the removal target 82 remains in the target material 80. If the removal target 82 remains in the target material 80, the control device 12 regenerates the motion trajectory 41 of the machining device 10 and controls the machining device 10 so that the remaining removal target 82 can be cut and removed. If the removal target 82 does not remain in the target material 80, the machining system 1 completes the processing of the target material 80 and dispenses it as a processed product. The processed product may be a finished product. In other words, the machining system 1 may manufacture the product by removing the removal target 82 from the target material 80.

A method of manufacturing the product by removing the removal target 82 from the target material 80 may be divided into a defect recognition process of recognizing the removal target 82, a trajectory generation process of generating the motion trajectory 41 of the end mill 20 based on the recognition result of the removal target 82, and a removal process of operating the machining device 10 based on the generated motion trajectory 41 to remove the removal target 82.

The defect recognition process may include the shape measurement device 32 measuring the outer peripheral shape of the end surface of the target material 80. The defect recognition process may include comparing the measurement result of the outer peripheral shape of the end surface of the target material 80 with a base shape of the end surface of the target material 80 given in advance and recognizing the position or shape of the removal target 82 present on the outer periphery of the end surface of the target material 80.

The trajectory generation process may include the control device 12 setting the range of the removal target 82 of the target material 80 based on the recognition result of the position or shape of the removal target 82. The trajectory generation process may include the control device 12 generating the motion trajectory 41 of the end mill 20 so that the removal target 82 can be cut with the end mill 20. The motion trajectory 41 of the end mill 20 includes a path along which the end mill 20 moves and the posture of the end mill 20. The posture of the end mill 20 may be specified by at least one of the heel angle of the end mill 20 or the inclination of the bottom surface 28 when the end mill 20 is viewed from the feed direction 26.

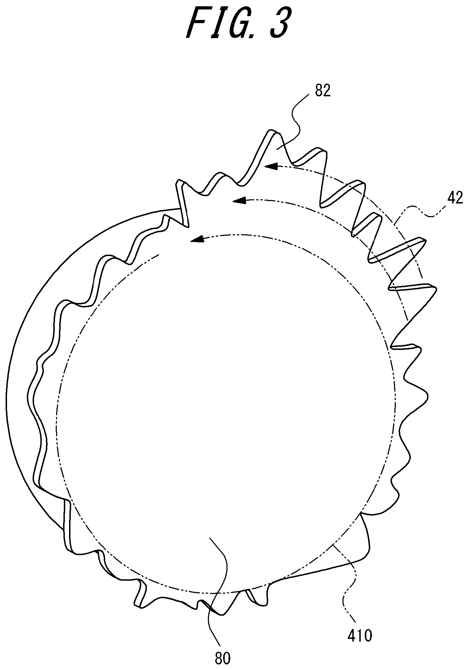

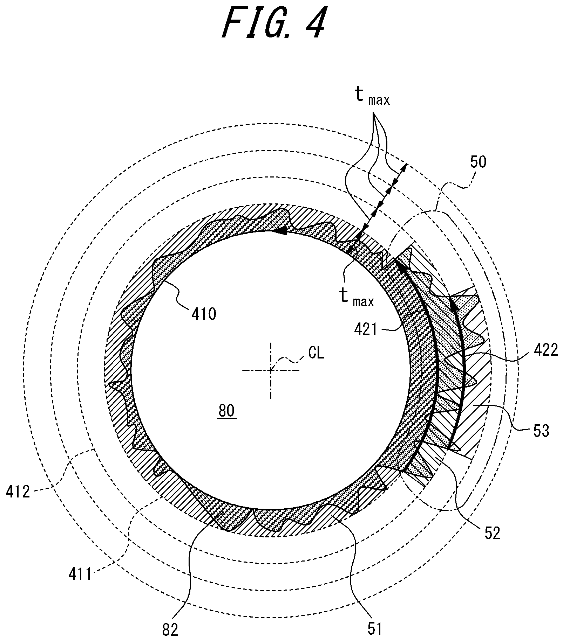

As illustrated in FIG. 3, in the trajectory generation process, the control device 12 generates, as the motion trajectory 41, a base path 410 for cutting the removal target 82 designated by dot-hatching (see FIG. 4) along the base shape of the outer periphery of the end surface of the target material 80. In other words, the motion trajectory 41 includes the base path 410. Moreover, if the removal target 82 includes a large protruding part, the control device 12 may further generate a partial path 42 as the motion trajectory 41.

The range in which the end mill 20 moves along the base path 410 to perform cutting corresponds to a range from the base path 410 to the outside by a distance of a cut-in allowance tₘₐₓ (cuttable shape) of the end mill 20, as illustrated in FIG. 4. The range in which the end mill 20 moves along the base path 410 to perform cutting is also referred to as a base cutting range 51, and is designated by right upward diagonal hatching in FIG. 4. The cut-in allowance tₘₐₓ may be determined in advance based on the performance of the machining tool such as the end mill 20 or the characteristics such as strength of burrs or slag as the removal target 82.

In the case where the removal target 82 extends beyond the base cutting range 51, the control device 12 may generate the motion trajectory 41 so that the end mill 20 will move along a path outside the base path 410 to perform cutting before moving along the base path 410 to perform cutting. The control device 12 may set a path that is outward from the base path 410 along the base shape of the outer periphery of the end surface of the target material 80 by the distance of the cut-in allowance tₘₐₓ (cuttable shape) of the end mill 20, as a one-lap outside full-circumference path 411. The control device 12 may generate the motion trajectory 41 so as to further include the full-circumference path 411. In order to cut a part of the removal target 82 of the target material 80 that protrudes from only a part of the outer periphery of the end surface, the control device 12 may generate the motion trajectory 41 so as to include a partial path 421 that, in the full-circumference path 411, passes only the protruding part in the outer periphery of the end surface of the target material 80. The range in which the end mill 20 moves along the partial path 421 to perform cutting is also referred to as a one-lap outside cutting range 52, and is designated by right downward diagonal hatching in FIG. 4. The partial path 421 is part of the partial path 42.

In the case where the removal target 82 further extends beyond the one-lap outside cutting range 52, the control device 12 generates the motion trajectory 41 so that the end mill 20 will move along a path outside the partial path 421 to perform cutting before moving along the partial path 421 to perform cutting. The control device 12 may set a path that is outward from the base path 410 along the base shape of the outer periphery of the end surface of the target material 80 by twice the distance of the cut-in allowance tₘₐₓ (cuttable shape) of the end mill 20, as a two-lap outside full-circumference path 412. The control device 12 may generate the motion trajectory 41 so as to further include the full-circumference path 412. In order to cut a part of the removal target 82 of the target material 80 that protrudes from only a part of the outer periphery of the end surface, the control device 12 may generate the motion trajectory 41 so as to include a partial path 422 that, in the full-circumference path 412, passes only the protruding part in the outer periphery of the end surface of the target material 80. The range in which the end mill 20 moves along the partial path 422 to perform cutting is also referred to as a two-lap outside cutting range 53, and is designated by right upward diagonal hatching in FIG. 4. The partial path 422 is part of the partial path 42.

The range that is outside the base cutting range 51 and in which the end mill 20 moves repeatedly along the partial path 42 to perform cutting is represented as a repeated cutting range 50 in FIG. 4. The repeated cutting range 50 may include the one-lap outside cutting range 52 and the two-lap outside cutting range 53. Part of the motion trajectory 41 generated for cutting of the repeated cutting range 50 is also referred to as a concentrated cutting trajectory. By generating the concentrated cutting trajectory, the control device 12 can shorten the movement distance of the end mill 20. As a result, the removal target 82 is removed at high speed.

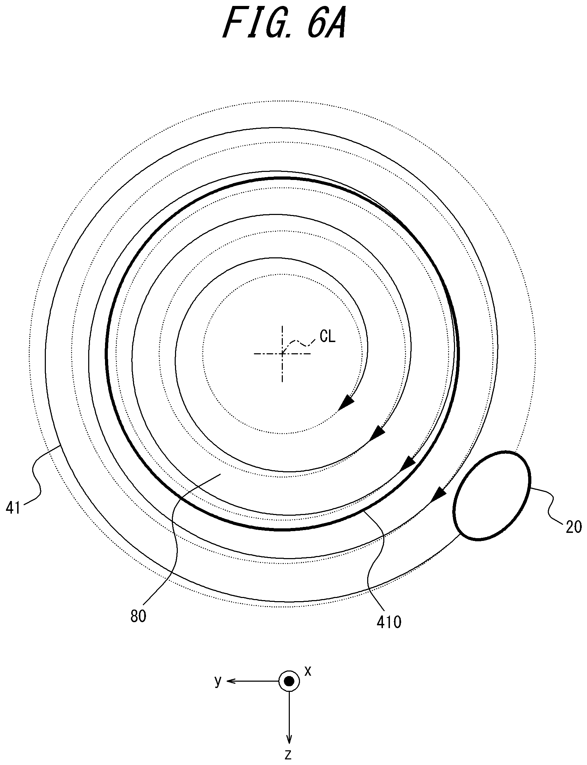

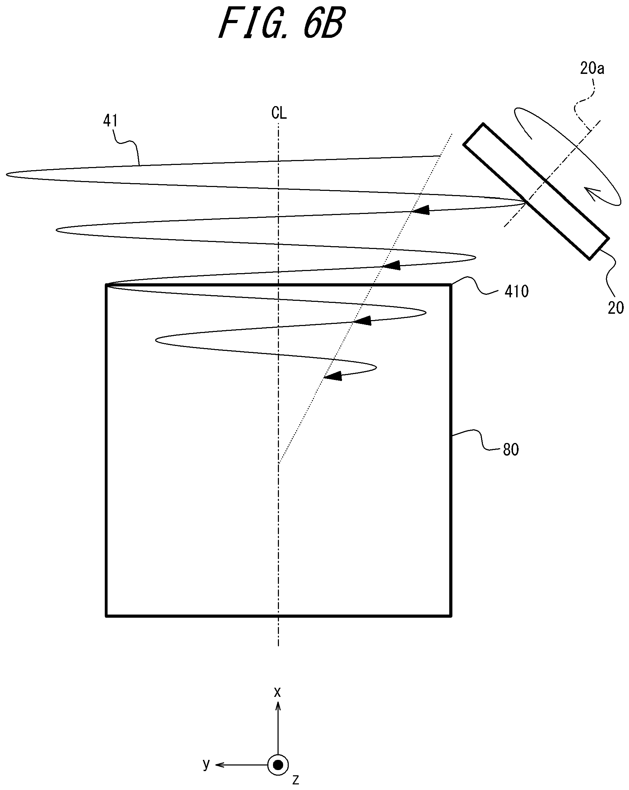

As illustrated in the perspective view in FIG. 5, the plan view in FIG. 6A, and the side view in FIG. 6B, the control device 12 may generate the motion trajectory 41 so as to gradually approach the base path 410 from a path set outside the base path 410. In other words, the control device 12 may generate the motion trajectory 41 so that the base path 410 and the path (for example, the full-circumference path 411 or 412, etc.) outside the base path 410 are continuous. By generating the motion trajectory 41 as a continuous path, it is possible to move the end mill 20 continuously. As a result, the removal target 82 is cut at high speed. In the case where the base path 410 is a circle, the control device 12 may generate the motion trajectory 41 so that the radius of the continuous path will decrease continuously. Such a path whose radius decreases continuously may be generated as a spiral curve. In the case where the base path 410 is any path that is not limited to a circle, the control device 12 may generate the motion trajectory 41 so that the continuous path will approach the base path 410 inwardly in the radial direction of the motion trajectory 41 while rotating around the outside of the target material 80. In this embodiment, such a path generated so as to approach the base path 410 radially inwardly while rotating is also referred to as a spiral path.

For example, the control device 12 may generate the motion trajectory 41 as a spiral curve so as to continuously connect the full-circumference path 412, the full-circumference path 411, and the base path 410. The control device 12 may generate the motion trajectory 41 so as to include, as the partial path 421 or 422, only a part of the path corresponding to the full-circumference path 411 or 412 included in the spiral curve where a large protruding part of the removal target 82 is present. The partial path 421 or 422 is included in the concentrated cutting trajectory.

For example, the full-circumference path one lap outside the base path 410 is also referred to as a first path, and the base path 410 is also referred to as a second path. The control device 12 may generate the motion trajectory 41 so that the end point of the first path and the start point of the second path will be continuous. The full-circumference path two laps outside the base path 410 is also referred to as the first path, and the full-circumference path one lap outside the base path 410 is also referred to as the second path. Thus, when one full-circumference path corresponds to the first path, the full-circumference path one lap inside the first path corresponds to the second path. The start point and the end point of each full-circumference path may be set to be located on a straight line extending outward from the center of the end surface of the target material 80 in a plan view of the end surface. The straight line on which the start point and the end point of each full-circumference path are located is specified by an angle with respect to the Y-axis or Z-axis, for example. The angle of the straight line is also referred to as a predetermined phase angle.

In the case where the removal target 82 is present only in part of the first path, the control device 12 may generate, instead of the first path, a partial path of the first path that passes only the part where the removal target 82 is present in the first path. The control device 12 may further generate a path connecting the end point of the partial path of the first path to the start point of the second path. The control device 12 may generate the motion trajectory 41 so as to include the partial path of the first path, the path connecting the end point of the partial path of the first path to the start point of the second path, and the second path.

As illustrated in FIGS. 5, 6A, and 6B, the control device 12 may generate the motion trajectory 41 so that the end mill 20 will approach the target material 80 from a position away from the target material 80 in the direction of the center axis CL of the target material 80. In other words, the control device 12 may generate the motion trajectory 41 so that the end mill 20 will approach the end surface of the target material 80 in the axial direction when rotating around the outside of the target material 80. As illustrated in FIG. 5, the control device 12 may generate the motion trajectory 41 so that the end mill 20 will approach the target material 80 by a distance t each time the end mill 20 makes one lap (rotation) around the end surface of the target material 80. The control device 12 may generate the motion trajectory 41 so that the motion trajectory 41 will not move in the axial direction.

The motion trajectory 41 generated as illustrated in FIG. 5 passes along the surface of a cone whose axis is the same as the center axis CL of the target material 80. The envelope of the motion trajectory 41 has an angle θc with respect to the center axis CL of the target material 80. The angle θc is specified based on the distance tₘₐₓ by which the motion trajectory 41 approaches the base path 410 in the radial direction and the distance t by which the motion trajectory 41 approaches the end surface of the target material 80 in the axial direction each time the motion trajectory 41 makes one lap (rotation) around the outer periphery of the end surface of the target material 80.

The angle of the rotation axis 20a of the end mill 20 may be the same as or different from the angle θc by which the motion trajectory 41 moves for each rotation.

The control device 12 may generate the motion trajectory 41 so that the motion trajectory 41 will be inside the base path 410 in a plan view of the end surface of the target material 80. The control device 12 may generate the motion trajectory 41 so that at least part of the range cut by the end mill 20 (i.e. the range in which the cutting point 24 of the end mill 20 passes) passes along the base path 410 in a plan view of the end surface of the target material 80. As a result of the range cut by the end mill 20 passing along the base path 410, the outer periphery of the end surface of the target material 80 is processed so as to have a chamfered shape.

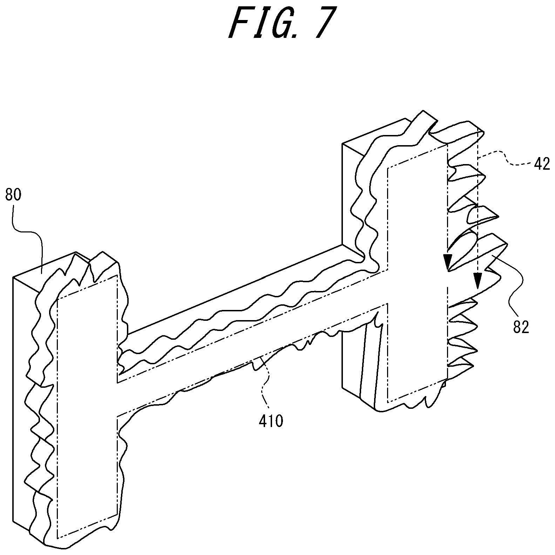

In the case where the target material 80 is a steel H-beam as illustrated in FIG. 7, the control device 12 may generate the motion trajectory 41 with the outer periphery of the end surface of the steel H-beam as the base path 410. In the case where there is a large protruding removal target 82 in part of the end surface of the steel H-beam, the control device 12 may generate the motion trajectory 41 so as to include the partial path 42. The target material 80 is not limited to the foregoing cylinder or steel H-beam, and other examples include polygonal columns such as triangular and rectangular columns, elliptic columns, and columnar materials having any straight lines or curves as the outer periphery of the end surface.

The target material 80 may include a hollow material such as a steel pipe or tube. In the case where the target material 80 is a steel pipe or tube, a cut surface of the steel pipe or tube may include not only an outward protruding removal target 82 but also an inward protruding removal target 82. In order to cut and remove the outward protruding removal target 82 with the end mill 20, the control device 12 may generate the motion trajectory 41 as described above.

Meanwhile, in order to cut and remove the inward protruding removal target 82 of the steel pipe or tube with the end mill 20, the control device 12 may generate the motion trajectory 41 by setting a base path 410 along the base shape of the inside of the steel pipe or tube. In the case where there is a large protruding removal target 82 on the inside of the steel pipe or tube, the control device 12 may generate the motion trajectory 41 by setting a path that is one or more laps inside the base path 410. The control device 12 may generate the motion trajectory 41 so as to gradually approach the base path 410 outward from a path inside the base path 410. In the case where the base path 410 is a circle, the control device 12 may generate the motion trajectory 41 so that the radius of the continuous path will increase continuously. Such a path whose radius increases continuously may be generated as a spiral curve, as with a path whose radius decreases continuously. In the case where the base path 410 is any path that is not limited to a circle, the control device 12 may generate the motion trajectory 41 so that the continuous path will approach the base path 410 outwardly in the radial direction of the motion trajectory 41 while rotating around the inside the target material 80. In this embodiment, such a path generated so as to approach the base path 410 radially outwardly while rotating is also referred to as a spiral path.

For example, the full-circumference path one lap inside the base path 410 is also referred to as a first path, and the base path 410 is also referred to as a second path. The control device 12 may generate the motion trajectory 41 so that the end point of the first path and the start point of the second path will be continuous. The full-circumference path two laps inside the base path 410 is also referred to as the first path, and the full-circumference path one lap inside the base path 410 is also referred to as the second path. Thus, when one full-circumference path corresponds to the first path, the full-circumference path one lap outside the first path corresponds to the second path. The start point and the end point of each full-circumference path may be set to be located on a straight line extending outward from the center of the annular end surface of the target material 80 in a plan view of the annular end surface. The straight line on which the start point and the end point of each full-circumference path are located is specified by an angle with respect to the Y-axis or Z-axis, for example. The angle of the straight line is also referred to as a predetermined phase angle.

The control device 12 may generate the motion trajectory 41 so that the end mill 20 will approach the end surface of the target material 80 in the axial direction when rotating around the inside the target material 80. The control device 12 may generate the motion trajectory 41 so that the motion trajectory 41 will not move in the axial direction.

### <Flowchart>

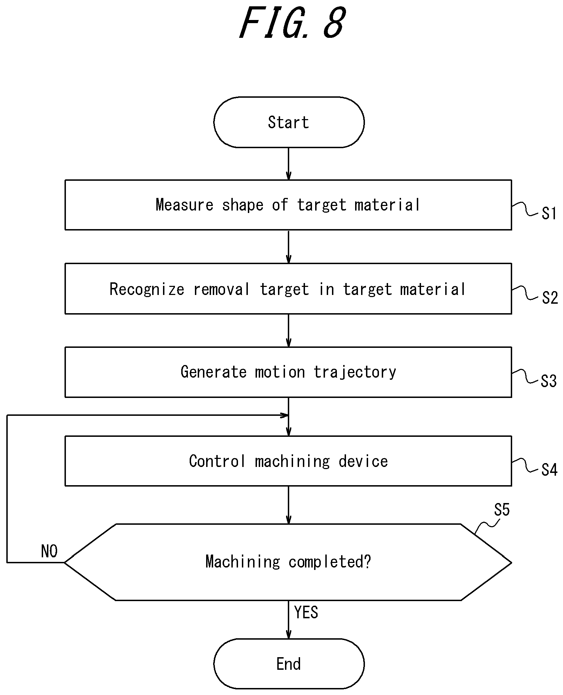

The machining system 1 may execute a product manufacturing method including the procedure of the flowchart illustrated in FIG. 8 as an example. The product manufacturing method may include a trajectory generation method by which the control device 12 in the machining system 1 generates the motion trajectory 41. The product manufacturing method or trajectory generation method may be implemented as a product manufacturing program or trajectory generation program executed by a processor included in, for example, the control device 12. The product manufacturing program or trajectory generation program may be stored in a non-transitory computer-readable medium.

The shape measurement device 32 in the machining system 1 measures the shape of the outer periphery of the end surface of the target material 80 (step S1). The removal target recognition device 30 in the machining system 1 recognizes the position and shape of the removal target 82 present on the outer periphery of the end surface of the target material 80 based on the measurement result of the shape of the outer periphery of the end surface of the target material 80 (step S2).

The control device 12 in the machining system 1 generates the motion trajectory 41 for moving the end mill 20 based on the recognition result of the position and shape of the removal target 82 (step S3). In this embodiment, the control device 12 generates information that specifies the movement path of the end mill 20 and the posture of the end mill 20 as the motion trajectory 41.

The control device 12 controls the machining device 10 based on the generated motion trajectory 41 (step S4). In this embodiment, the control device 12 controls the machining device 10 to move the end mill 20 along the motion trajectory 41.

The control device 12 determines whether machining is completed (step S5). If machining is not completed (step S5: NO), the control device 12 returns to the control procedure of step S4 and continues to control the machining device 10. If the control device 12 determines that machining is completed (step S5: YES), the machining system 1 ends the procedure of the flowchart in FIG. 8. As the product manufacturing method, the machining system 1 may further execute a step of inspecting whether the removal target 82 is successfully removed after completion of machining. The trajectory generation method in the product manufacturing method may include the procedure of steps S1 to S3 in FIG. 8.

### <Summary>

As described above, the machining system 1 according to the present disclosure moves the machining device 10 including a cutting device such as the end mill 20 along a spiral path relative to the base shape of the target material 80, based on the position and shape of the removal target 82 present on the outer periphery of the end surface of the target material 80. Thus, the machining device 10 can continuously cut the target material 80. As a result, the removal target 82 is automatically removed at high speed.

The machining system 1 also moves the machining device 10 including a cutting device such as the end mill 20 along a path that approaches the end surface of the target material 80 while rotating around the outer periphery of the end surface of the target material 80. Thus, the machining device 10 can continuously cut the target material 80. As a result, the removal target 82 is automatically removed at high speed.

When the manufacturing method for the target material 80 according to the above embodiment was applied to the removal of removal targets 82 such as burrs or slag in casting products, the man hours were reduced by about 15 % compared to the removal work for burrs or slag performed manually by an operator using a grinder or the like.

### (Other embodiments)

Other embodiments will be described below.

### <Example of structure including distance measurement device>

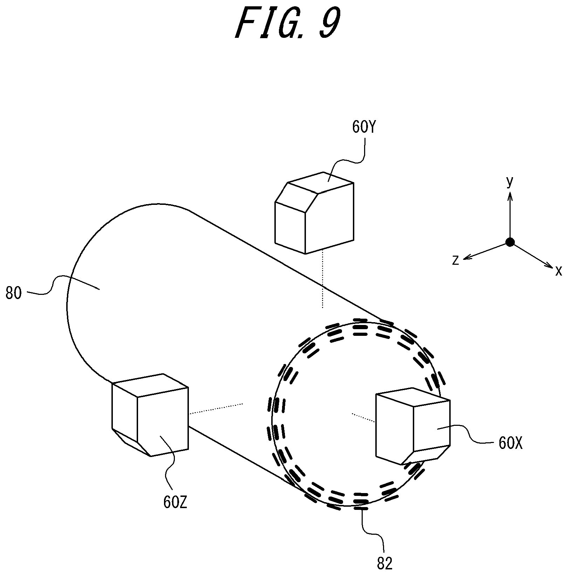

In the above embodiment, the machining system 1 measures the shape of the target material 80 by the shape measurement device 32. The machining system 1 may measure the position of the target material 80 by measuring the distance to the target material 80 by a distance measurement device, and generate the motion trajectory 41 based on the measurement result of the position of the target material 80 and the preset base shape of the target material 80. As illustrated in FIG. 9, the machining system 1 may include, as the distance measurement device, a range finder 60X that measures the distance to the target material 80 in the X-axis direction, a range finder 60Y that measures the distance to the target material 80 in the Y-axis direction, and a range finder 60Z that measures the distance to the target material 80 in the Z-axis direction. The range finders 60X, 60Y, and 60Z measure the distance to the surface of the end of the target material 80 including the removal target 82.

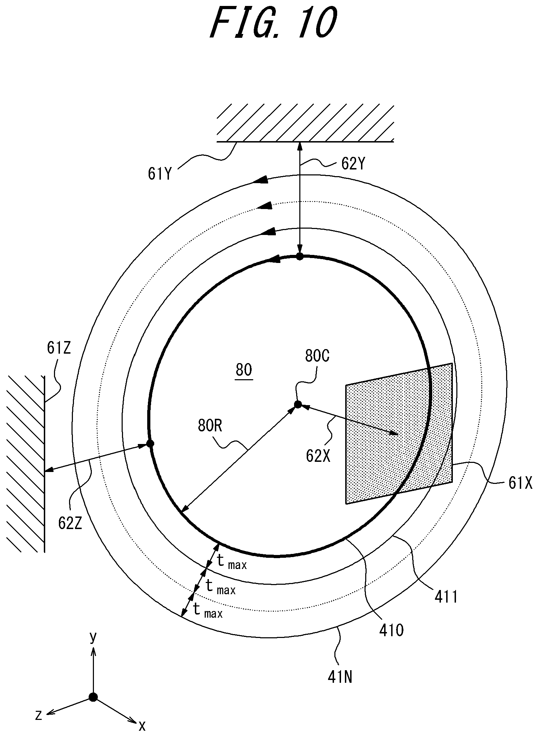

As illustrated in FIG. 10, the range finder 60X measures the distance 62X from a reference plane 61X in the X-axis direction to the end surface of the target material 80. The range finder 60X may measure the distance 62X from the reference plane 61X to the center 80C of the end surface as illustrated in FIG. 10, or measure the distance from the reference plane 61X to any point on the end surface. The range finder 60Y measures the distance 62Y from a reference plane 61Y in the Y-axis direction to the side surface of the target material 80. The range finder 60Z measures the distance 62Z from a reference plane 61Z in the Z-axis direction to the side surface of the target material 80.

The control device 12 identifies the position of the end surface of the target material 80 based on the measurement results of the range finders 60X, 60Y, and 60Z. The control device 12 may acquire the base shape of the outer periphery of the end surface of the target material 80 in advance. In the case where the target material 80 is a cylinder, the control device 12 may acquire the value of the radius 80R of the end surface of the target material 80, and identifies the base shape of the outer periphery of the end surface of the target material 80 by the value of the radius 80R. The control device 12 may generate a base path 410 based on the position of the end surface of the target material 80 and the base shape. The control device 12 may generate a one-lap outside full-circumference path 411 based on the base path 410.

In the case where the size of the removal target 82 can be obtained based on the measurement result of the distance measurement device, the control device 12 may determine the number of rotations of the end mill 20 based on the size of the removal target 82. In the case where the control device 12 determines the number of rotations of the end mill 20 to be N, the control device 12 may generate a N-lap outside full-circumference path 41N. The control device 12 may set the interval between the paths of the respective laps to the distance of the cut-in allowance tₘₐₓ (cuttable shape) of the end mill 20. In the case where the size of the removal target 82 cannot be measured, the control device 12 may determine the number of rotations of the end mill 20 based on an estimated value of the size of the removal target 82.

In the case where the position of the removal target 82 can be identified based on the measurement result of the distance measurement device, the control device 12 may generate a partial path 42 based on the position of the removal target 82 as the motion trajectory 41.

As described above, the machining system 1 can automatically cut and remove the removal target 82 with a simple structure by using the distance measurement device. The simplified structure reduces the costs of the machining system 1.

Although the embodiment of the present disclosure has been described by way of the drawings and examples, various changes and modifications may be made by those of ordinary skill in the art based on the present disclosure. Such various changes and modifications are therefore included in the scope of the present disclosure. For example, the functions included in the components, steps, etc. may be rearranged without logical inconsistency, and a plurality of components, steps, etc. may be combined into one component, step, etc. and a component, step, etc. may be divided into a plurality of components, steps, etc. The embodiment of the present disclosure may also be implemented as a program executed by a processor included in the device or a storage medium storing the program. These are also encompassed within the scope of the present disclosure.

### REFERENCE SIGNS LIST

1 machining system
10 machining device
12 control device
20 end mill (20a: rotation axis, 24: cutting point, 26: feed direction, 28: bottom surface)
22 spindle
30 removal target recognition device
32 shape measurement device
41 motion trajectory (410: base path, 411: one-lap outside full-circumference path, 412: two-lap outside full-circumference path, 41N: N-lap outside full-circumference path)
42 partial path (421: one-lap outside partial path, 422: two-lap outside partial path)
50 repeated cutting range
51 base cutting range
52, 53 one-lap outside cutting range, two-lap outside cutting range
60X, 60Y, 60Z range finders in X-axis, Y-axis, and Z-axis directions
61X, 61Y, 61Z reference planes in X-axis, Y-axis, and Z-axis directions
62X, 62Y, 62Z distances in X-axis, Y-axis, and Z-axis directions
80 target material (80C: center, 80R: radius, 84: cutting target surface, 86: cutting trajectory)
82 removal target

## Claims

1. A machining system comprising:
a machining device configured to process a target material containing a removal target; and
a control device configured to generate a motion trajectory of the machining device for removing the removal target based on a three-dimensional shape and posture of the target material and a position and shape of the removal target, and move the machining device based on the motion trajectory,
wherein the control device is configured to generate, as the motion trajectory, a path along which the machining device approaches a base shape of the target material while rotating around an outside of the target material or a path along which the machining device approaches the base shape of the target material while rotating around an inside of the target material.

2. The machining system according to claim 1, wherein the control device is configured to generate, as the motion trajectory, a path along which the machining device moves toward an axial direction when the machining device rotates around the outside or the inside of the target material.

3. The machining system according to claim 1 or 2, wherein the motion trajectory includes a first path that goes around the outside or the inside of the target material and a second path that goes around the outside or the inside of the target material from a start point that is a point inside or outside a start point of the first path, and
the control device is configured to, if the removal target is present in only a part of the first path, generate a partial path passing only a range in which the removal target is present in the first path, and generate, as the motion trajectory, a path that includes the partial path, a path connecting an end point of the partial path to the start point of the second path, and the second path.

4. The machining system according to claim 1, wherein the machining device includes a cutting device configured to remove the removal target by cutting the removal target with an end mill.

5. The machining system according to claim 4, wherein the control device is configured to control the cutting device so that an angle between a rotation axis of the end mill and a feed direction of the end mill will be an acute angle.

6. A trajectory generation method of generating a motion trajectory for moving a machining device to remove a target material containing a removal target, the trajectory generation method comprising:
measuring a three-dimensional shape and posture of the target material;
recognizing a position and shape of the removal target; and
generating, as the motion trajectory, a path along which the machining device approaches a base shape of the target material while rotating around an outside of the target material or a path along which the machining device approaches the base shape of the target material while rotating around an inside of the target material, based on the three-dimensional shape and posture of the target material and the position and shape of the removal target.

7. A product manufacturing method comprising
removing a removal target in a target material by moving a machining device based on a motion trajectory generated by executing the trajectory generation method according to claim 6.
